# DEMANDE DE BREVET EUROPEEN

(11) **EP 0 562 932 A1**
(43) Date de publication de la demande: **29.09.1993**
(21) Numéro de dépôt: 93400723.8
(22) Date de dépôt: 22.03.1993
(51) Int. Cl.: G01B 11/10

(54) **Dispositif de mesure d'au moins une dimension d'un échantillon**

(30) Priorité: 26.03.1992 FR 9203658
(71) Demandeur: FRAMATOME CONNECTORS INTERNATIONAL, 92084 Paris La Défense (FR)
(72) Inventeur: Ollivier, Jean-François, F-22230 Merdrignac (FR); Lalaouna, Said, F-72400 La Ferte Bernard (FR); Penha, Manuel, F-72100 Le Mans (FR); Bourin, Jean-Michel, F-75116 Paris (FR)
(74) Mandataire: Rodhain, Claude

(57) **Abrégé**

L'invention a pour objet un dispositif de mesure d'au moins une dimension d'un échantillon (10) et comportant une pièce de base (2) présentant une rainure de référence (4) ainsi qu'un dispositif (L) pour produire un rayonnement (1) de mesure de l'échantillon (5). Un porte-échantillon (5) présente d'une part un contour extérieur cylindrique (56) coopérant avec la rainure (4) et d'autre part une partie cylindrique de référence (6) coopérant avec une ouverture (12) de l'échantillon (10). De la sorte, l'échantillon (10) suit les déplacements du porte-échantillon (5) sans venir en contact avec la rainure de référence (4). Ceci permet une mesure de grande précision en des points multiples de l'échantillon (10).

## Description

La présente invention a pour objet un dispositif de mesure d'au moins une dimension d'un échantillon, notamment une virole (ou férule) destinée à recevoir une fibre optique.

Une virole pour connecteur à fibre optique comporte un contour extérieur cylindrique très précis ainsi qu'une ouverture très précise disposée dans l'axe de la virole et dont le diamètre, typiquement de 125 microns, correspond au diamètre extérieur d'une fibre optique pourvue de sa gaine optique. Les mesures de ce contour extérieur présentent un certain nombre de difficultés étant donné que les tolérances sont très étroites (de l'ordre du micron), et que l'on doit mesurer aussi bien le diamètre extérieur de la virole dans différentes positions longitudinales de celle-ci ainsi que dans différentes positions angulaires de celle-ci de manière à détecter un défaut de forme.

Dans le cas d'une virole en matière plastique, une mesure à l'aide de palpeurs mécaniques présente l'inconvénient d'une faible reproductibilité étant donné que le choc du palpeur avec la surface de la virole est susceptible d'écraser celle-ci d'une distance de l'ordre de quelques microns, ce qui rend la mesure insuffisamment précise. Entre autre, il est difficile avec un palpeur mécanique de réaliser un grand nombre de points de mesure et donc de localiser les défauts. En outre, un palpeur mécanique ne se prête pas particulièrement à une automatisation de la mesure.

Il est par ailleurs connu de réaliser une mesure de dimension d'un échantillon à l'aide d'un rayonnement laser. On met en oeuvre pour ce faire une pièce de base présentant une rainure de référence, généralement en forme de V, dans laquelle l'échantillon à mesurer est disposé. Il est ainsi possible de disposer une virole selon différentes positions de mesure aussi bien longitudinales qu'angulaires. Cependant, comme une virole est susceptible de présenter un certain nombre de défauts d'ovalisation, de désalignement, etc... répartis sur tout son contour, son positionnement dans le V de mesure, qui se fait théoriquement selon deux génératrices de cylindre, dépend en pratique des défauts précités et est de ce fait susceptible de fausser la mesure, notamment en raison du fait que la virole n'est pas forcément absolument perpendiculaire à la direction du rayonnement lumineux. Il en résulte dans ce cas, que le diamètre mesuré est supérieur au diamètre réel puisque le rayonnement laser voit la pièce à mesurer sous un angle oblique.

La présente invention a ainsi pour objet un dispositif de mesure permettant d'éviter les inconvénients précités et qui en outre puisse se prêter facilement à une automatisation.

L'invention concerne ainsi un dispositif de mesure d'au moins une dimension d'un échantillon et comportant une pièce de base présentant une rainure de référence ainsi qu'un moyen agencé pour produire un rayonnement de mesure de l'échantillon, caractérisé en ce qu'il comporte un porte-échantillon présentant d'une part un contour de référence cylindrique pour coopérer avec la rainure de référence de la pièce de base et d'autre part un élément de référence pour coopérer avec une surface de référence de l'échantillon de telle sorte que ce dernier suive les déplacements du porte(échantillon sans venir en contact avec la rainure de référence de la pièce de base.

Le porte-échantillon, qui est une pièce usinée avec précision dont on est sûr que les défauts sont nettement inférieurs à la tolérance de mesure, est de ce fait parfaitement positionnée par rapport à la rainure de référence en V, l'échantillon à mesurer étant quant à lui également positionné avec précision par coopération entre sa surface de référence, notamment un trou axial d'une virole d'un connecteur à fibre optique, et l'élément de référence, notamment un cylindre de précision disposé en prolongement d'une extrémité du porte-échantillon. L'échantillon à mesurer n'est ainsi plus en contact avec la rainure de référence et sa position n'est plus influencée par les défauts de son contour extérieur qu'il s'agit précisément de mesurer.

Selon un mode de réalisation compatible avec une automatisation aisée, le dispositif comporte une roulette d'entraînement en rotation du porte-échantillon.

La roulette peut être ainsi disposée dans un logement d'un support et être couplée à un axe d'entraînement commandé par un moteur pas-à-pas, éventuellement couplé élastiquement à l'axe d'entraînement.

Selon un mode de réalisation préféré permettant de minimiser les frottements du porte-échantillon en rotation, le dispositif comporte une pige cylindrique disposée dans la rainure de référence de telle sorte que le contour de référence cylindrique du porte-échantillon ait une première génératrice en contact avec la rainure de référence et une deuxième génératrice en contact avec la pige cylindrique. Cette pige cylindrique permet en outre de surélever l'axe de l'échantillon au-dessus de la rainure de référence.

L'élément de référence du porte échantillon peut être un cylindre ou un mandrin disposé en prolongement d'une extrémité du porte-échantillon.

Ladite extrémité peut comporter un profil de référence en forme de V de manière à permettre un repérage angulaire.

L'invention concerne également un procédé de mesure caractérisé en ce qu'il comporte au moins une étape de mise en rotation d'un échantillon selon un angle donné à l'aide du dispositif ci-dessus et au moins une étape de mesure d'une dimension de l'échantillon.

D'autres caractéristiques et avantages de l'invention seront mieux compris à la lecture de la description qui va suivre, donnée à titre d'exemple non limitatif, en liaison avec les dessins dans lesquels :
- la figure 1 est une vue éclatée d'un dispositif selon un mode préféré de réalisation de l'invention ;
- la figure 2 est une vue latérale explicative du fonctionnement du porte-échantillon en rotation ;
- les figures 3a, 3b, 3c représentent un porte-échantillon respectivement en vue de droite, en coupe longitudinale et en vue de gauche ;
- la figure 4 représente le porte-échantillon en perspective ;
- les figures 5a et 5b représentent respectivement en perspective et en coupe longitudinale, un support destiné à recevoir la roulette d'entraînement selon l'invention.

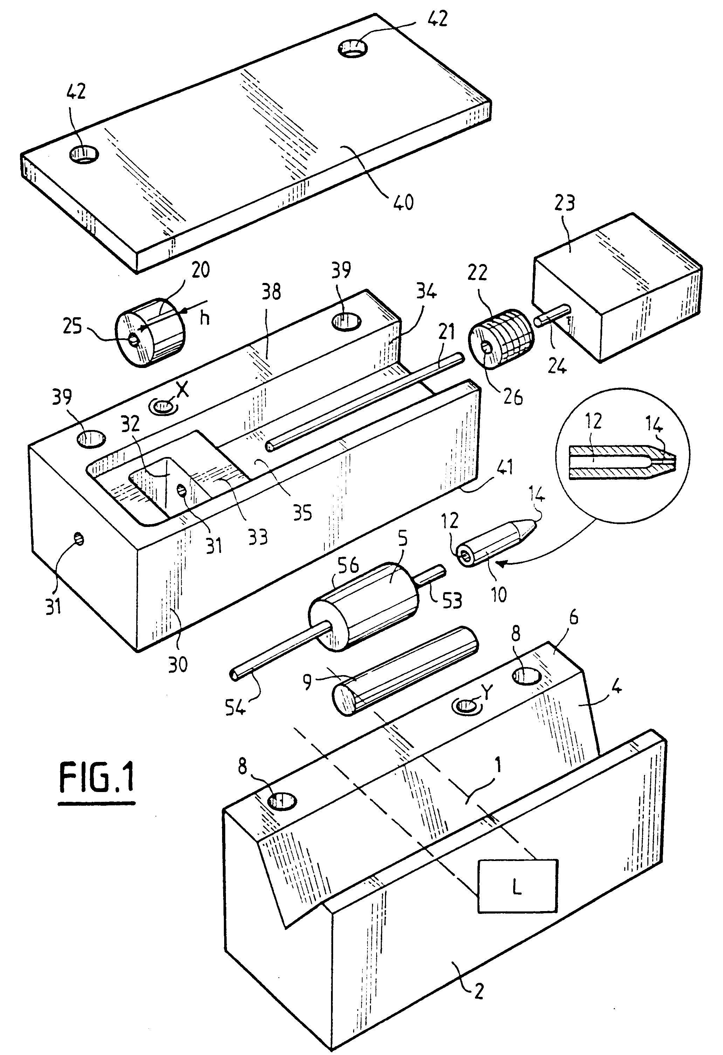

Selon la figure 1, un banc de mesure dimensionnelle par ombroscopie laser connu en soi commercialisé sous la dénomination LASERMIKE par la société ORC - 77680 ROISSY-EN-BRIE en particulier le modèle 183-100 comporte un laser L à hélium-néon fournissant un faisceau 1 de longueur d'onde 632,8 mm formant un "rideau laser" grâce à la mise en oeuvre d'un miroir rotatif et de lentilles collimatrices (non représentées). Le banc de contrôle comporte également une pièce de base 2 comportant une surface de référence 4 en forme de V disposée dans une direction longitudinale de la pièce de base 2. L'introduction d'un échantillon à mesurer crée un segment d'ombre qui génère un signal électrique dont la durée est proportionnelle à la dimension de l'objet à mesurer, cette durée étant en rapport avec la vitesse de balayage du faisceau laser 1. Le signal électrique est décodé et permet de restituer la dimension de l'échantillon, ici le diamètre, avec une résolution de l'ordre de 0,2 micron.

Selon l'invention, on veut mesurer par exemple le diamètre d'une virole 10, d'un connecteur à fibre optique présentant une ouverture coaxiale de référence 12 de diamètre nominal 125 microns destiné à recevoir une fibre optique nue pourvue de sa gaine optique et un trou 12 débouchant à l'arrière de la virole 10 et présentant un diamètre nominal de 0,9 mm.

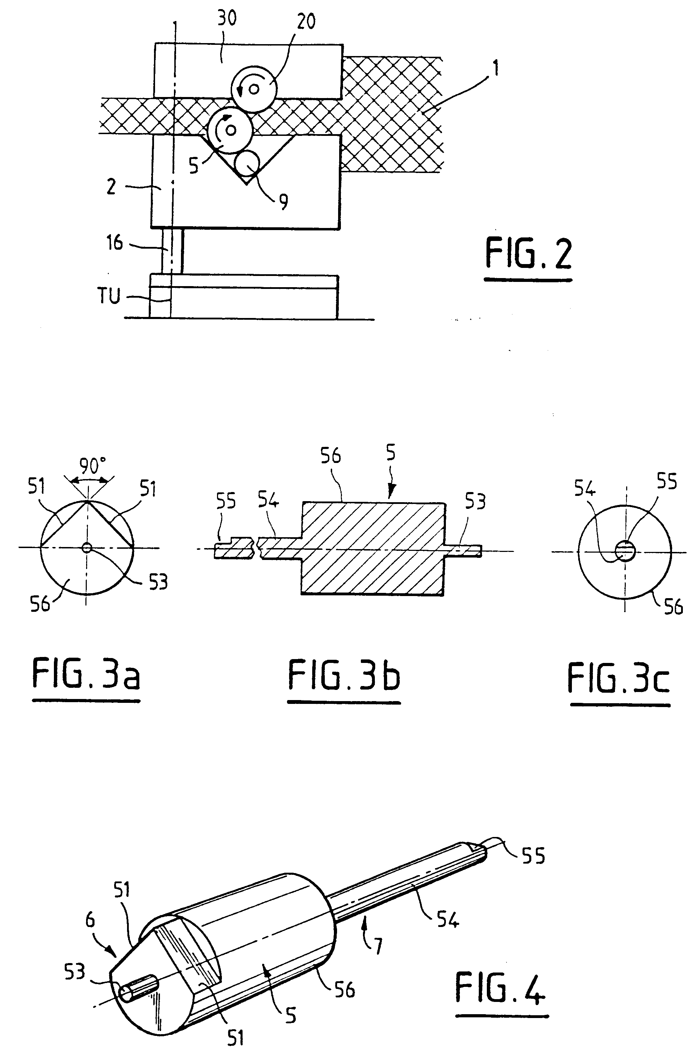

Une pièce de référence 5 usinée avec grande précision présente un contour extérieur 56 parfaitement cylindrique (à mieux d'un micron près), ainsi qu'à une de ses extrémités une portion cylindrique 53 formant une pige de précision de diamètre nominal 0,9 mm (à moins d'un micron près) qui s'introduit à faible jeu dans le trou 12 de la virole 10. En outre, une pige de précision de faible diamètre est disposée au fond de la rainure 4 et le porte-échantillon 5 est entraîné en rotation par une roulette 20 qui vient porter sur sa face supérieure. Comme le montre la figure 2, la roulette 20 est entraînée dans le sens des aiguilles d'une montre, le porte-échantillon 5 dans le sens opposé, et la pige 9 ne tourne pas. La rotation de la roulette d'entraînement 20 crée une action positive pour maintenir en butée le porte-échantillon 5 sur un des bords 14 de la rainure 4 en forme de V, ce qui fait que le contour extérieur 56 est positionné par contact d'une de ses génératrices avec le bord précité 14 de la rainure 4 et une autre génératrice en contact avec la pige 9.

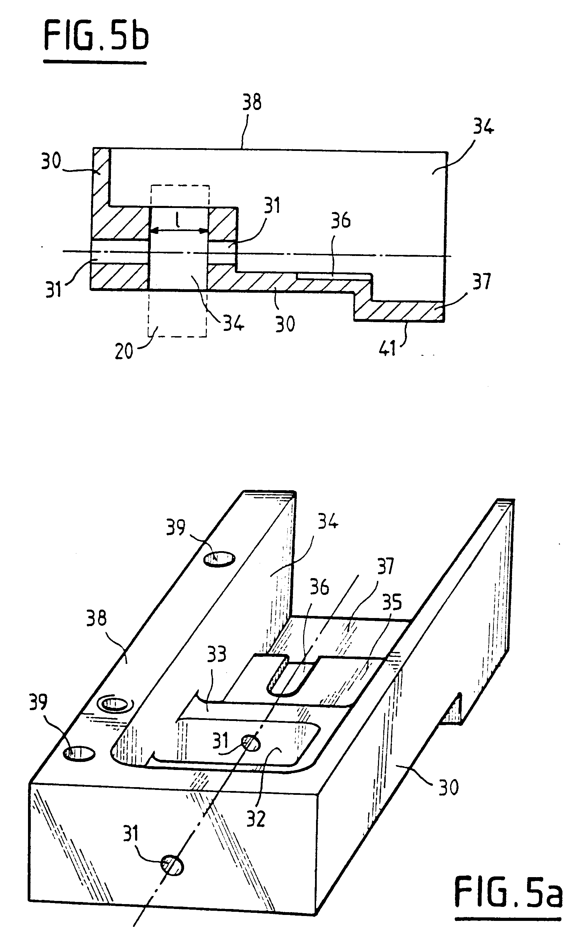

La roulette d'entraînement 20 présente une ouverture axiale 25 coopérant avec un axe 21 qui s'engage dans celle-ci et dans deux ouvertures 31 coaxiales d'un support 30, la roulette 20 venant dans un logement 32 disposé à la partie inférieure du support 30, de telle sorte qu'il dépasse d'une face inférieure 41 du support 30 pour venir en contact avec le porte-échantillon 5 (voir figure 5b). L'axe 21 est entraîné par un moteur pas-à-pas 23 présentant un axe de sortie 24 qui est couplé à l'axe 21 par l'intermédiaire d'une pièce élastique de couplage 22 présentant une ouverture axiale 26. La face supérieure 38 du support 30 présente des trous lisses 39. Uun capot 40 présente des trous lisses 42 correspondant aux trous lisses 39. Le support 30 est monté sur la pièce de base 2 qui comporte des trous lisses 8 à sa surface supérieure 6.

La pièce de base 2 et le support 30 sont positionnés sur une unité de translation UT, déplaçable parallèlement à l'axe longitudinal de la rainure 4 par l'intermédiaire de deux colonnes 16 vissées dans un socle intermédiaire. Ce montage permet de solidariser les différents éléments dans un plan vertical. Les trous lisses 8, 39 et 42 servent au passage des colonnes 16. Le réglage de la force d'écrasement de la roulette élastique 20 sur le porte-pièce 5 est contrôlé par une vis positionnée dans le trou taraudé répéré X dans le support 30 et s'appuyant sur la face supérieure de la pièce de base 2. Le réglage de la hauteur du porte-échantillon par rapport au milieu du rideau laser 1 (zone de meilleure précision) est réalisé par une vis positionnée dans le trou taraudé repéré Y dans la pièce de base 2 et s'appuyant sur la face supérieure du socle intermédiaire.

Il est possible de programmer le moteur pas-à-pas pour faire tourner le porte-échantillon 5 et éventuellement le translater (unité de translation UT) selon un programme de mesure pré-établi alternant un déplacement et une mesure de diamètre de l'échantillon 10 en travers la fente transversale 3.

Sur les figures 3a à 3c et 4, le porte - échantillon 5 comporte à une extrémité un axe 53 usiné avec précision et coaxial à mieux d'un micron près, avec le contour extérieur cylindrique 56, et un profil en forme de V 51 d'un angle d'ouverture de 90° permettant un repérage angulaire très précis (par minimum de lumière transmise pour le faisceau 1). L'autre extrémité 54 du porte-échantillon 5 se termine par une portion échancrée 55 permettant un repérage angulaire visuel.

Selon les figures 5a et 5b, le support 30 présente, outre l'ouverture 32 débouchant sur la face inférieure pour laisser dépasser la roulette d'entraînement 20, un logement 36 destiné au passage de la pièce de couplage élastique 22. La roulette 20 à une hauteur h sensiblement égale à la largeur l de l'ouverture 32.

L'invention ne se limite pas aux modes de réalisation décrits et représentés. En particulier, la surface de référence de l'échantillon, au lieu d'être une ouverture cylindrique, pourrait être un contour cylindrique externe (cas d'une pièce pleine). L'élément de référence 6 présente alors une forme complémentaire correspondante.

## Revendications

**1 -** Dispositif de mesure d'au moins une dimension d'un échantillon et comportant une pièce de base présentant une rainure de référence ainsi qu'un moyen agencé pour produire un rayonnement de mesure d'échantillon caractérisé en ce qu'il comporte un porte-échantillon, (5) présentant d'une part un contour de référence cylindrique (56) pour coopérer avec la rainure de référence (4) de la pièce de base (2) et d'autre part un élément de référence (6) pour coopérer avec une surface de référence (12) de l'échantillon (10) de telle sorte que ce dernier (10) suive les déplacements du porte-échantillon (5) sans venir en contact avec la rainure de référence (4) de la pièce de base (2).

**2 -** Dispositif selon la revendication 1 caractérisé en ce qu'il comporte une roulette (20) d'entraînement en rotation du porte-échantillon (5).

**3 -** Dispositif selon la revendication 2 caractérisé en ce que la roulette (20) est disposée dans un logement (32) d'un support (30) et en ce qu'elle est couplée à un axe d'entraînement (21) commandé par un moteur pas-à-pas (23).

**4 -** Dispositif selon la revendication 3 caractérisé en ce que le moteur pas-à-pas (23) est couplé élastiquement (22) à l'axe d'entraînement (21).

**5 -** Dispositif selon l'une des revendications précédentes caractérisé en ce qu'il comporte une pige cylindrique (9) disposée dans la rainure de référence (4) de telle sorte que le contour de référence cylindrique (56) du porte-échantillon ait une première génératrice en contact avec la rainure de référence (4) et une deuxième génératrice en contact avec la pige cylindrique (9).

**6 -** Dispositif selon l'une des revendications précédentes caractérisé en ce que la rainure de référence (4) de la pièce de base (2) est en forme de V.

**7 -** Dispositif selon l'une des revendications précédentes caractérisé en ce que l'élément de référence (6) du porte-échantillon (5) est un cylindre (53) ou un mandarin disposé en prolongement d'une extrémité du porte-échantillon (5).

**8 -** Dispositif selon la revendication 7 caractérisé en ce que ladite extrémité comporte un profil de référence (51) en forme de V de manière à permettre un repérage angulaire.

**9 -** Dispositif selon l'une des revendications précédentes caractérisé en ce que le rayonnement de mesure présente une direction perpendiculaire à un axe de la rainure de référence (4) et est soumis à un balayage parallèlement à lui-même.

**10 -** Procédé de mesure caractérisé en ce qu'il comporte au moins une étape de mise en rotation d'un échantillon selon un angle donné à l'aide d'un dispositif selon l'une des revendications précédentes et au moins une étape de mesure d'une dimension de l'échantillon (10).
